# EUROPÄISCHE PATENTANMELDUNG

(11) **EP 4 534 155 A2**
(43) Veröffentlichungstag der Anmeldung: **09.04.2025**
(21) Anmeldenummer: 25153236.2
(22) Anmeldetag: 02.09.2020
(51) Int. Cl.: A63B 35/12

(54) **WASSERFAHRZEUG**

(30) Priorität: 10.10.2019 DE 102019127224
(62) Teilanmeldung aus: 20767505.9
(71) Anmelder: CAYAGO TEC GmbH, 32108 Bad Salzuflen (DE)
(72) Erfinder: WALPURGIS, Hans-Peter, 32108 Bad Salzuflen (DE)
(74) Vertreter: Herrmann, Jochen

(57) **Zusammenfassung**

Die Erfindung betrifft ein Wasserfahrzeug (10) mit einem Rumpf der im Bereich eines Oberschiffs (13) eine Auflage aufweist, auf der ein Benutzer sich mit seinem Oberkörper teilweise auflegen und sich an vorzugsweise im Bugbereich (11) angeordneten Haltegriffen (20) festhalten kann, wobei dem Rumpf ein Strömungskanal (40) zugeordnet ist oder der Rumpf einen Strömungskanal (40) aufweist, wobei im Strömungskanal (40) eine Wasserschraube (41) angeordnet ist, wobei der Strömungskanal (40) eine Ansaugöffnung (33) und in Strömungsrichtung nach der Wasserschraube (41) einen Strahlaustritt (43) im Heckbereich (12) aufweist und wobei ein Tragkörper (50) am Heckbereich (12) derart angeordnet ist, dass die Auflage mittels einer Auflagefläche (51) des Tragkörpers (50) verlängert ist. Bei einem solchen Wasserfahrzeug ist eine erhebliche Steigerung der Fahrgeschwindigkeit dann erreichbar, wenn vorgesehen ist, dass der Tragkörper (50) an seiner Unterseite wenigstens eine Gleitfläche (56) aufweist und dass der Tragkörper (50) starr mit dem Rumpf verbunden ist.

## Beschreibung

Die Erfindung betrifft ein Wasserfahrzeug mit einem Rumpf, der im Bereich eines Oberschiffs eine Auflage aufweist, auf der ein Benutzer sich mit seinem Oberkörper teilweise auflegen und sich an vorzugsweise im Bugbereich angeordneten Haltegriffen festhalten kann, wobei dem Rumpf ein Strömungskanal zugeordnet ist oder der Rumpf einen Strömungskanal aufweist, wobei im Strömungskanal eine Wasserschraube angeordnet ist, wobei der Strömungskanal eine Ansaugöffnung und in Strömungsrichtung nach der Wasserschraube einen Strahlaustritt im Heckbereich aufweist und wobei ein Tragkörper am Heckbereich derart angeordnet ist, dass die Auflage mittels einer Auflagefläche des Tragkörpers verlängert ist.

Ein derartiges Wasserfahrzeug ist aus der DE 10 2018 104 431 bekannt. Dieses Wasserfahrzeug bildet ein Zugfahrzeug, an das im Heckbereich ein Schwimmbrett über eine Gelenkverbindung angeschlossen ist. Das Schwimmbrett verlängert die Auflagefläche des Wasserfahrzeugs. Dementsprechend liegt der Benutzer mit seinem Oberkörper teilweise auf dem Wasserfahrzeug und mit dem restlichen Körperbereich auf dem Schwimmbrett auf. Auf diese Weise wird der Strömungswiderstand, den der Körper des Benutzers dem strömenden Wasser entgegensetzt, zumindest teilweise eliminiert.

Es ist Aufgabe der Erfindung, ein Wasserfahrzeug der eingangs erwähnten Art bereitzustellen, mit dem die Fahrgeschwindigkeit deutlich gesteigert werden kann.

Diese Aufgabe wird dadurch gelöst, dass der Tragkörper an seiner Unterseite wenigstens eine Gleitfläche aufweist und dass der Tragkörper starr mit dem Rumpf verbunden ist.

Über die starre Verbindung wird die Relativbewegung des Tragkörpers gegenüber dem Wasserfahrzeug derart verhindert, dass der Tragkörper im Anschlussbereich an das Wasserfahrzeug nicht mehr abknicken kann. Es hat sich gezeigt, dass über eine solche starre Verbindung der Strömungswiderstand insbesondere bei dynamischen Wasserfahrten deutlich verringert werden kann. Auf diese Weise kann eine an der Unterseite des Tragkörpers vorgesehene Gleitfläche dazu genutzt werden, um das Wasserfahrzeug strömungsoptimiert von einer Verdrängerfahrt in eine Gleitfahrt zu überführen. Dies führt zu deutlich erhöhten Fahrgeschwindigkeiten.

Vorzugsweise ist der Tragkörper so ausgelegt, dass im angebauten Zustand an das Wasserfahrzeug seine Erstreckung in Richtung der in Fahrtrichtung orientierten Mittellängsachse des Wasserfahrzeugs zumindest 30 % bis 50 %, bevorzugt mindestens 50 % bis 70 %, besonders bevorzugt mindestens 70 % der Länge des Wasserfahrzeugs beträgt. Bei mindestens 30 % bis 50 % bleibt eine gute Manövrierfähigkeit des Wasserfahrzeugs erhalten. Bei mindestens 50 % bis 70 % sind bereits erhebliche Geschwindigkeitssteigerungen möglich. Über 70 % sind deutliche Geschwindigkeitssteigerungen möglich. Versuche der Erfinder haben ergeben, dass dabei die Fahrgeschwindigkeit gegenüber der Grundgeschwindigkeit des Wasserfahrzeugs ohne Tragkörper teilweise um mehr als das Doppelte gesteigert werden konnte.

Gemäß einer bevorzugten Ausgestaltungsvariante der Erfindung kann es vorgesehen sein, dass der Tragkörper auswechelbar mit dem Rumpf verbindbar ist.

Auf diese Weise kann das Wasserfahrzeug in zwei Verwendungsarten betrieben werden. In der ersten Verwendungsart, ohne angebauten Tragkörper geht eine reduzierte Fahrgeschwindigkeit mit einer guten dynamischen Manövrierfähigkeit einher. In der zweiten Verwendungsart, mit angebautem Tragkörper, können insbesondere schnelle Überwasserfahrten verwirklicht werden. Der Benutzer hat damit die Möglichkeit, das Wasserfahrzeug je nach Einsatzzweck herzurichten. Mit dieser Maßnahme kann auch ein besserer Transport erreicht werden, da zu Transportzwecken der Tragkörper platzsparend abgebaut werden kann.

Gemäß einer Erfindungsvariante kann es auch vorgesehen sein, dass der Tragkörper fest mit dem Wasserfahrzeug verbunden, insbesondere einteilig an den Rumpf angekoppelt ist.

Wenn eine lösbare Verbindung zwischen dem Wasserfahrzeug und dem Tragkörper vorgesehen ist, dann hat sich gezeigt, dass es insbesondere von Vorteil ist, wenn zwischen dem Rumpf und dem Tragkörper eine Wechselkupplung wirksam ist. Mittels der Wechselkupplung kann der Tragkörper auswechselbar mit dem Rumpf verbunden werden. Über diese Kupplungsverbindung kann der Benutzer den Tragkörper einfach an- bzw. abbauen, um zwischen den einzelnen Betriebsarten zu wechseln.

Hierbei erweist es sich als vorteilhaft, wenn zudem vorgesehen ist, dass die Wechselkupplung einen oder mehrere Vorsprünge aufweist, die in eine oder mehrere Halteaufnahmen des anderen Verbindungspartners (Rumpf oder Tragkörper) eingesetzt sind. Auf diese Weise wird eine besonders steife und starre Verbindung zwischen dem Wasserfahrzeug und dem Tragkörper möglich. Die Vorsprünge, welche in die Halteaufnahmen eingreifen, ermöglichen im Verbindungsbereich die zuverlässige Aufnahme der anstehenden Biegebeanspruchungen.

Wenn vorgesehen ist, dass am Tragkörper oder am Rumpf zwei zueinander beabstandet angeordnete Profilabschnitte vorstehen, die in Steckaufnahmen des Rumpfs oder des Tragkörpers eingesetzt sind, dann kann der Tragkörper einfach an das Wasserfahrzeug angesteckt werden. Über die Beabstandung der Hohlprofilabschnitte lassen sich Querkräfte zuverlässig aufnehmen. Selbstverständlich ist es auch möglich, die vorstehenden Profitabschnitte nicht am Tragkörper, sondern alternativ am Wasserfahrzeug anzuordnen, sodass diese in Halteaufnahmen, insbesondere Steckaufnahmen des Tragkörpers eingreifen. Wenn allerdings die Hohlprofilabschnitte am Tragkörper vorgesehen sind, so stören sie die Verwendung des Wasserfahrzeuges nicht, wenn der Tragkörper abgebaut ist. Zusätzlich oder alternativ kann es auch vorgesehen sein, dass die Profilabschnitte abgebaut werden können oder das eine Schwenkverbindung oder Schiebeverbindung zwischen dem Wasserfahrzeug bzw. dem Tragkörper und dem Profilabschnitt vorgesehen ist, sodass die Profilabschnitte platzsparend verstaut werden können. Dadurch soll aber die starre Verbindung zwischen dem Wasserfahrzeug und dem Tragkörper nicht beeinträchtigt werden.

Vorzugsweise ist es jedoch vorgesehen, dass die Profilabschnitte am Tragkörper vorstehen und mit diesem fest verbunden sind. Dann beeinträchtigen sie nicht das Wasserfahrzeug, wenn der Tragkörper abgebaut ist. Die fest mit dem Tragkörper verbundenen Profilabschnitte ermöglichen eine besonders starre Ankopplung an das Wasserfahrzeug.

Im Rahmen der Erfindung soll es insbesondere auch möglich sein, dass die starre Verbindung zwischen dem Rumpf und dem Tragkörper so ausgelegt ist, dass, abgesehen von fertigungsbedingten Toleranzen, keine rotatorischen Bewegungen und/oder keine translatorischen Bewegungen zwischen dem Rumpf und dem Tragkörper entstehen. Insbesondere soll die starre Verbindung derart sein, dass im Verbindungsbereich keine Freiheitsgrade zwischen dem Wasserfahrzeug und dem Tragkörper zugelassen werden.

Gemäß einer bevorzugten Erfindungsvariante kann es vorgesehen sein, dass der Strahlaustritt des Strömungskanals so angeordnet ist, dass der von der Wasserschraube erzeugte Wasserstrahl an der Unterseite des Tragkörpers vorbeigeleitet, insbesondere an der Unterseite des Tragkörpers geführt ist. Dies ermöglicht einen besonders strömungsoptimierten Aufbau, mit dem die Fahrgeschwindigkeit weiter erhöht werden kann.

Eine denkbare Erfindungsalternative ist derart, dass der Tragkörper an seiner Unterseite eine Einmuldung aufweist, die derart ausgebildet ist, dass sie während des Fahrzeugbetriebs den Wasserstrahl teilweise aufnimmt und führt. Auf diese Weise kann eine geringe Bauhöhe für den Tragkörper verwirklicht werden. Es hat sich auch gezeigt, dass die Führung des Wasserstrahls in der Einmuldung zu einer weiteren Leistungssteigerung führen kann. Dabei erweist es sich zudem als günstig, wenn vorgesehen ist, dass die Einmuldung sich ausgehend von dem Anschlussbereich des Tragkörpers an den Heckbereich des Rumpfs in Richtung des dem Bugbereich abgewandten Endes erstreckt und im Bereich der Unterseite des Tragkörpers ausläuft.

Wenn vorgesehen ist, dass beidseitig der Mittellängsachse des Tragkörpers Gleitflächen angeordnet sind, die vorzugsweise zueinander angestellt sind und die besonders bevorzugt zumindest bereichsweise als konkave Flächen oder zumindest bereichsweise als ebene Flächen ausgebildet sind, dann lässt sich ein schneller Wechsel von der Verdrängerfahrt in die Gleitfahrt realisieren. Die Gleitflächen erstrecken sich dabei in Richtung der Mittellängsachse des Tragkörpers. Vorzugsweise sind die Gleitflächen so angeordnet, dass sie mittelbar oder unmittelbar in Strömungsflächen des Wasserfahrzeugs übergehen. Dabei sollte die Auslegung so getroffen werden, dass die Gleitflächen entweder absatzlos in die Strömungsflächen des Wasserfahrzeugs übergehen oder dass in Fahrtrichtung ein absteigender Absatz entsteht. Hierdurch wird dann der Wasserströmung kein hindernder Strömungswiderstand entgegengesetzt. Dadurch dass die Gleitflächen zueinander angestellt sind, wird eine Stabilisierung des Fahrbetriebs möglich.

Erfindungsgemäß kann es auch vorgesehen sein, dass der Rumpf im Bereich des Unterschiffs Wasserführungsflächen aufweist, die sich längs der Mittellängsachse, welche vom Bugbereich in Richtung Heckbereich verläuft, erstrecken, und dass die Wasserführungsflächen im Heckbereich Überleitbereiche aufweisen, die in die Gleitflächen des Tragkörpers übergeleitet sind. Vorzugsweise sind die Überleitbereiche strömungsgünstig, beispielsweise als konvexe Rundungen ausgebildet.

Wenn vorgesehen ist, dass der Rumpf beidseitig Vorsprünge aufweist, die im Heckbereich angeordnet sind, dass der Tragkörper in Richtung der Mittellängsachse von Seitenkanten begrenzt ist, und dass die Vorsprünge quer zur Mittellängsachse des Rumpfs über die Seitenkanten, zumindest im Anschlussbereich vorstehen, dann werden die seitlichen Anschlussbereiche des Tragkörpers an das Wasserfahrzeug strömungsoptimiert gestaltet und hier in diesem Bereich störende Strömungswiderstände, die insbesondere Spritzwasser erzeugen können, vermieden.

Besonders bevorzugt kann es dabei auch vorgesehen sein, dass die Vorsprünge zumindest teilweise die Wasserführungsflächen bilden. Auf diese Weise können die Wasserführungsflächen mittels der Vorsprünge verbreitert werden, was die Gleiteigenschaften unterstützt.

Eine denkbare Erfindungsalternative ist derart, dass im Rumpf zusätzlich zum Strömungskanal ein Flutungsraum angeordnet ist, der während der Wasserfahrt über Wassereintrittsöffnungen mittels dem umgebenden Wasser mit Wasser gefüllt werden kann. Wenn das Wasserfahrzeug in das Wasser gesetzt wird, so füllt sich der Flutungsraum mit Wasser. Hierüber kann der Auftrieb des Wasserfahrzeugs beeinflusst werden. Wird das Wasserfahrzeug aus dem Wasser genommen, so fließt das Wasser wieder aus dem Flutungsraum durch die Wassereintrittsöffnungen heraus. Damit reduziert sich dann das Transportgewicht des Wasserfahrzeugs. Es ergibt sich mithin ein einfaches System, mit dem der Auftrieb des Wasserfahrzeugs einfach eingestellt werden kann.

Wenn zudem vorgesehen ist, dass der Flutungsraum zusätzlich zu den Wassereintrittsöffnungen auch über Wasseraustrittsöffnungen mit der Umgebung derart in Verbindung steht, dass während der Wasserfahrt Wasser durch den Flutungsraum geleitet und eine darin gehaltenen elektrische Baueinheit gekühlt wird, dann kann der Flutungsraum zur effektiven Kühlung der elektrischen Baueinheiten verwendet werden. Das strömende Wasser steht in unbegrenztem Ausmaß zu Kühlzwecken bereit.

Im Rahmen der Erfindung sollen insbesondere Wasserfahrzeuge verstanden werden, welche einen Elektromotor aufweisen, der die Wasserschraube mittelbar oder unmittelbar antreibt. Der Elektromotor wird über eine oder mehrere Akkumulatoren angetrieben. Weiterhin ist eine Steuereinheit vorgesehen. Diese steuert die Funktionen des Wasserfahrzeugs.

Eine oder mehrere der vorgenannten Komponenten (Elektromotor, Akkumulator, Steuereinheit) können zumindest bereichsweise in dem Flutungsraum zu Kühlzwecken untergebracht sein.

Eine mögliche Erfindungsgestaltung ist derart, dass am Unterschiff eine Ausbuchtung vorgesehen ist, die den Strömungskanal bildet oder diesen überdeckt, und dass die Wasserführungsflächen beidseitig dieser Ausbuchtung angeordnet sind. Hierdurch ergeben sich ein platzsparender Aufbau und eine besonders günstige Anströmung der Wasserführungsflächen.

Zusätzlich oder alternativ kann es auch vorgesehen sein, dass im Bereich der Ausbuchtung eine oder mehrere Stabilisierungsfinnen angeordnet sind. Diese Stabilisierungsfinnen tragen dazu bei, den Fahrbetrieb zu stabilisieren. An der Ausbuchtung sind sie weit beabstandet von der Mittellängsachse des Wasserfahrzeuges angeordnet. Hierdurch können sie ihre Stabilisierungseigenschaften gut entfalten.

Erfindungsgemäß kann es auch vorgesehen sein, dass der Tragkörper aus einem Formkörper gebildet ist, dessen Kern aus geschäumtem Kunststoffmaterial besteht, und dass dieser Kern mit einer harten Kunststoffschicht ummantelt ist. Beispielweise kann der Kern aus PU-Schaum bestehen. Die ummantelte Kunststoffschicht kann beispielsweise aus PUR gebildet sein.

Die Erfindung wird im Folgenden anhand eines in den Zeichnungen gezeigten Ausführungsbeispiels näher erläutert. Es zeigen:
- Figur 1: in perspektivischer Ansicht von hinten ein Wasserfahrzeug mit einem Tragkörper,
- Figur 2: das Wasserfahrzeug mit angebauten Tragkörper gemäß Figur 1 in perspektivischer Ansicht von unten,

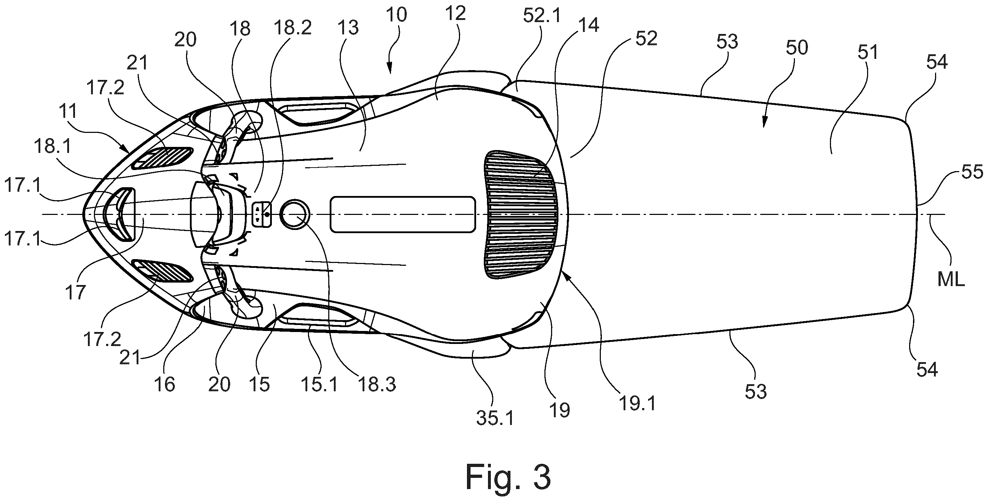

- Figur 3: die Baueinheit gemäß den Figuren 1 und 2 in Ansicht von oben,
- Figur 4: die Baueinheit gemäß den Figuren 1 und 2 in Ansicht von unten,
- Figur 5: eine Seitenansicht auf die Baueinheit gemäß den Figuren 1 und 2,
- Figur 6: die Baueinheit gemäß den Figuren 1 bis 5 in Ansicht von hinten.

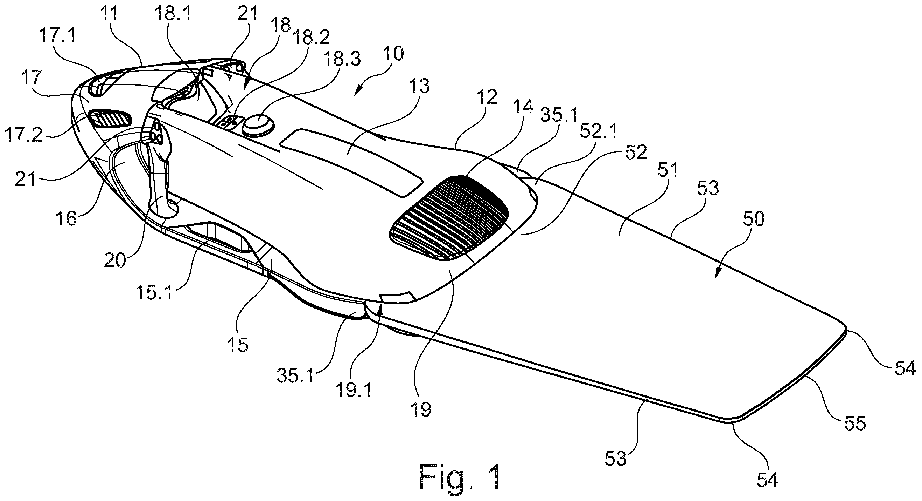

Figur 1 zeigt ein Wasserfahrzeug 10, welches im Rahmen der Erfindung sowohl für Tauchfahrten als auch für Überwasserfahrten eingesetzt werden kann.

Das Wasserfahrzeug 10 weist einen Rumpf mit einem Bugbereich 11 und einem Heckbereich 12 auf. In dem Rumpf des Wasserfahrzeugs 10 sind ein Elektromotor und einer oder mehrere Akkumulatoren untergebracht. Die Akkumulatoren versorgen den Elektromotor mit Strom.

Wie Figur 1 erkennen lässt, weist das Wasserfahrzeug 10 ein Oberschiff 13 auf. Das Oberschiff 13 bildet eine Auflagefläche. Auf dieser kann sich ein Benutzer mit einem Bereich seines Oberkörpers auflegen. Im Bereich des Oberschiffs 13 sind seitlich Haltegriffe 20 vorgesehen. An diesen Haltegriffen 20 kann sich der Benutzer festhalten.

Den Haltegriffen 20 können Bedienelemente 21 zugeordnet sein. Mit diesen Bedienelementen 21 können Funktionalitäten des Wasserfahrzeugs 10 gesteuert werden. Beispielsweise können die Bedienelemente 21 dergestalt sein, dass sich die Leistungsabgabe des Elektromotors regulieren lässt. Den Bedienelementen 21 können auch weitere Funktionalitäten zugeordnet sein. Beispielsweise können diese verwendet werden, um eine Programmierung eines Controllers des Wasserfahrzeugs 10 durchzuführen. Es ist auch denkbar, andere Funktionen des Wasserfahrzeugs 10 mittels der Bedienelemente 21 zu steuern.

Im Anschluss an die Haltegriffe 20 sind Armauflagen 15 vorgesehen. Auf diesen kann der Benutzer seine Unterarme bequem ablegen. Im Bereich der Armauflagen 15 können auch Tragegriffe 15.1 zu beiden Seiten des Wasserfahrzeugs 10 vorgesehen sein. Dies ist allerdings nicht zwingend erforderlich. Vielmehr ist es auch denkbar, keine solche Tragegriffe 15.1 zu verwenden, dann können im Bereich des Unterschiffs 30 des Wasserfahrzeugs 10 im Bereich unter den Armauflagen 15 Wasserführungsflächen angeordnet oder fortgesetzt sein.

Wie Figur 1 zeigt, können die Haltegriffe 20 strömungsgünstig im Bereich einer Griffmulde 16 hinter einer Nase 17 des Wasserfahrzeugs 10 angeordnet sein.

Die Nase 17 ist im Bugbereich 11 des Wasserfahrzeugs angeordnet und kann unabhängig von der Griffmulde 16 gestaltet sein. Die Nase 17 verjüngt sich stromlinienförmig in Richtung zur Vorderseite des Wasserfahrzeugs. Wie die Zeichnungen erkennen lassen, ist es denkbar, dass im Bereich der Nase 17 frontseitig ein Scheinwerfer 17.1 in den Rumpf des Wasserfahrzeugs integriert ist. Zusätzlich oder alternativ kann auch eine Kamera an der Nase 17 vorgesehen sein. Mittels der Kamera lassen sich Videoaufnahmen anfertigen, was insbesondere bei einer Unterwasserfahrt von Vorteil ist.

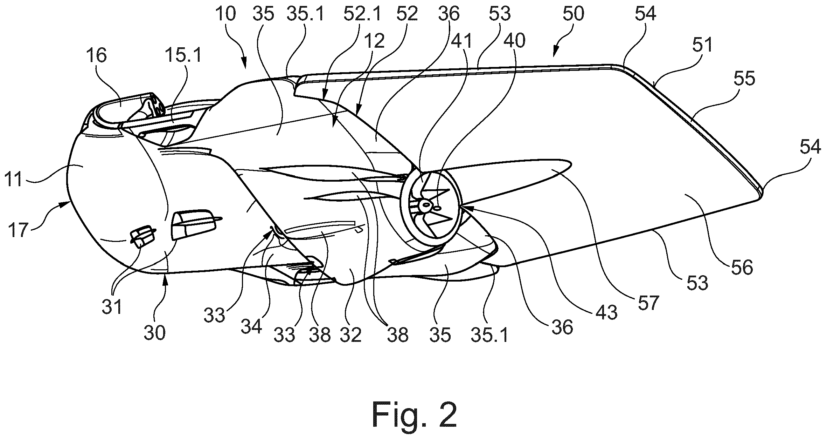

In den Rumpf des Wasserfahrzeugs 10 ist ein Flutungsraum integriert. Dieser Flutungsraum steht über Wassereintrittsöffnungen 17.2 und weiteren Wassereintrittsöffnungen 31, welche im Bereich des Unterschiffs angeordnet sind und welche in den Figuren 2, 4 und 5 gut erkennbar sind, mit der Umgebung in Verbindung.

In dem Flutungsraum können eine oder mehrere der vorstehend benannten elektrischen Baueinheiten zu Kühlzwecken eingebaut sein. Der Flutungsraum kann auch weiterhin mit einer Wasseraustrittsöffnung 14 mit der Umgebung in Verbindung stehen.

Wird das Wasserfahrzeug 10 in das Wasser gesetzt, so strömt das Wasser aus der Umgebung über die Wassereintrittsöffnungen 17.2, 31 und auch zunächst über die Wasseraustrittsöffnung 14 in den Flutungsraum hinein. Wenn das Wasserfahrzeug 10 in den Fahrbetrieb versetzt wird, so strömt das Wasser über die Wassereintrittsöffnungen 17.2, 31 in den Flutungsraum hinein. Dann durchströmt das Wasser den Flutungsraum und es verlässt den Flutungsraum durch die Wasseraustrittsöffnung 14.

Auf diese Weise wird während des Fahrbetriebs eine Wasserströmung im Flutungsraum erzeugt. Diese Wasserströmung kann zur kontinuierlichen Kühlung der darin gehaltenen elektrischen Baueinheit bzw. der darin gehaltenen elektrischen Baueinheiten verwendet werden.

Wenn im Bereich des Oberschiffs 13 Wassereintrittsöffnungen 17.2 vorgesehen sind, so können diese dazu verwendet werden, dass die Luft im Flutungsraum daraus verdrängt wird, wenn das Wasser durch andere Wassereintrittsöffnungen 17.2, 31 einströmt.

Wenn die Wassereintrittsöffnungen 31 im Bereich des Unterschiffs 30 vorgesehen sind, dann wird eine kontinuierliche Wasserversorgung während des Fahrbetriebs garantiert.

Figur 1 lässt weiter erkennen, dass im Bereich des Oberschiffs 13 eine Eintiefung 18 vorhanden ist. Diese Eintiefung 18 ist zwischen den Haltegriffen 20 angeordnet. Die Eintiefung 18 nimmt ein Display 18.1 auf. Auf diesem Display 18.1 kann der Benutzer während der Wasserfahrt Betriebsparameter kontrollieren. Die vorstehend genannten Bedienelemente 21 können auch dazu verwendet werden, zwischen verschiedenen Anzeigezuständen des Displays 18.1 umzuschalten.

Zusätzlich oder alternativ können auch am Oberschiff 13, vorzugsweise im Bereich der Eintiefung 18, weitere Bedienelemente 18.2 vorgesehen sein. Diese Bedienelemente 18.2 können auch zur Steuerung von Funktionalitäten des Wasserfahrzeugs 10 verwendet werden. Vorzugsweise kann mit diesen Bedienelementen 18.2 auch die Funktion des Displays und deren Anzeigezustände gesteuert werden

Im Bereich des Oberschiffs 13 ist ein Ladestecker vorgesehen. Dieser Ladestecker kann mit einem Abdeckelement 18.3 wasserdicht verschlossen werden. Mit dem Ladestecker können die Akkumulatoren an eine Spannungsversorgung zum Laden angeschlossen werden.

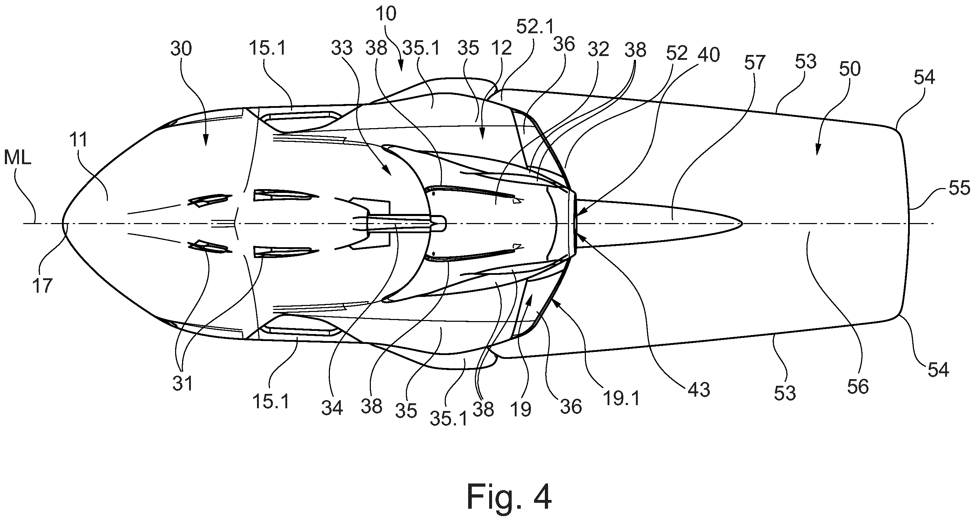

Die Figuren 2 und 4 lassen die Konstruktion des Unterschiffs 30 erkennen. In diesen Darstellungen sind deutlich die Wassereintrittsöffnungen 31 an der Unterseite des Wasserfahrzeuges 10 zu erkennen.

Innerhalb des Rumpfes des Wasserfahrzeugs 10 ist ein Strömungskanal 40 angeordnet. In diesem Strömungskanal 40 ist eine Wasserschraube 41 angeordnet. Die Wasserschraube 41 wird von dem Elektromotor angetrieben, welcher ebenfalls im Rumpf untergebracht ist.

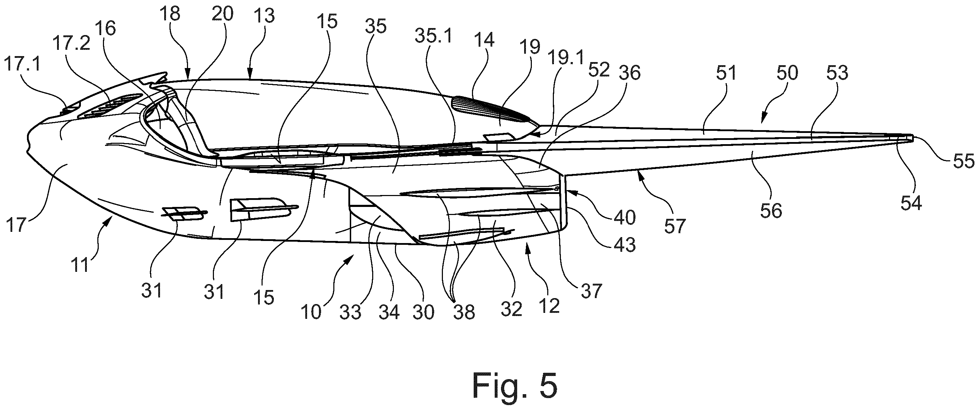

Der Strömungskanal 40 weist eine Ansaugöffnung 33 auf. Diese Ansaugöffnung 33 ist im Bereich der Unterseite des Wasserfahrzeugs 10 und vorzugsweise im Bereich des Mittelschiffs angeordnet, wie dies Figur 5 erkennen lässt. Dabei ist die Ansaugöffnung 33 großzügig dimensioniert. Um diese Ansaugöffnung dabei mechanisch zu stabilisieren, ist ein Stabilisierungselement 34 verwendet, welches in Form eines Schwerts den radial außen liegenden Bereich des Strömungskanals 40 gegenüber dem Rumpf abstützt. Wie Figur 2 erkennen lässt, werden dabei seitlich des Stabilisierungselements 34 Zuströmbereiche der Ansaugöffnung 33 gebildet.

Das Wasserfahrzeug 10 weist im Bereich seines Unterschiffs 30 eine Ausbuchtung 32 auf, die in den Zeichnungen deutlich zu erkennen ist. Diese Ausbuchtung 32 nimmt den Strömungskanal 40 auf.

Figur 2 lässt erkennen, dass das Wasserfahrzeug 10 seitlich der Ausbuchtung 32 Wasserführungsflächen 35 aufweist. Die Wasserführungsflächen verlaufen damit beidseitig des Strömungskanals 40.

Die Wasserführungsflächen 35 können, wie dies die Zeichnungen zeigen, kontinuierlich weitergeführt werden in Führungsflächen des Unterschiffs 30, welche sich vor der Ansaugöffnung 33 erstrecken. Vorzugsweise gehen diese Führungsflächen stetig in die Wasser Führungsflächen 35 über.

Damit die Wasserführungsflächen 35 möglichst großflächig dimensioniert werden können, sind am Rumpf seitliche Vorsprünge 35.1 vorgesehen. Die Wasser Führungsflächen 35 erstrecken sich über diese seitlichen Vorsprünge 35.1.

Zur Rückseite hin gehen die Wasser Führungsflächen 35 in Überleitbereiche 36 über. Diese Überleitbereiche 36 können beispielsweise in Form von konvexen Wölbungen gebildet sein.

Wie die Zeichnungen erkennen lassen, kann an das Wasserfahrzeug 10 ein Tragkörper 50 angebaut werden. Der Tragkörper 50 kann dabei starr mit dem Wasserfahrzeug 10 verbunden werden. Dies bedeutet, dass sich der Tragkörper 50 nicht gegenüber dem Wasserfahrzeug in Richtung der Bildebene gemäß Figur 5 abknicken lässt. Besonders bevorzugt ist die Verbindung des Tragkörpers 50 mit dem Wasserfahrzeug 10 so, dass sich der Tragkörper weder translatorisch noch rotatorische im Anbindungsbereich an das Wasserfahrzeug 10 (im Rahmen von fertigungsbedingten Toleranzen) gegenüber dem Wasserfahrzeug 10 verstellen lässt.

Der Tragkörper 50 kann entweder auswechselbar oder fest mit dem Wasserfahrzeug 10 verbunden sein.

Der Tragkörper 50 bildet an seiner Oberseite eine Auflagefläche 51. Diese Auflagefläche 51 schließt sich unmittelbar an das Oberschiff 13 des Wasserfahrzeugs 10 an. Auf diese Weise wird die Auflagefläche des Wasserfahrzeugs 10, auf der sich der Benutzer auflegen kann, verlängert und ergibt sich aus der Summe der Auflageflächen des Oberschiffs 13 und der Auflagefläche 51 des Tragkörpers 50.

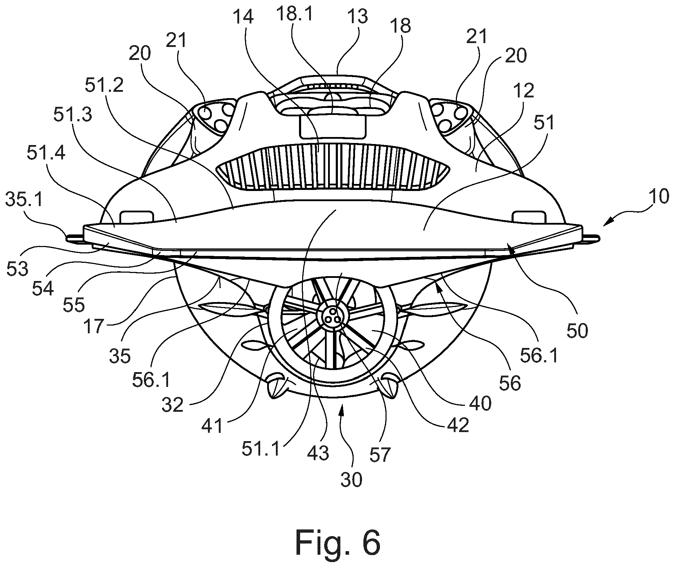

Figur 6 lässt die Gestaltung der Auflagefläche 51 deutlicher erkennen. Wie diese Zeichnung erkennen lässt, ist die Auflagefläche 51 nach oben gewölbt ausgebildet. Zu diesem Zweck kann es beispielsweise vorgesehen sein, dass die Auflagefläche 51 einen erhabenen Mittenbereich 51.1 aufweist. An diesen Mittenbereich 51.1 schließen sich über Übergangsabschnitte 51.2 Seitenabschnitte 51.3 an. Die Übergangsabschnitte 51.2 können beispielsweise als konvexe Wölbungen ausgeführt sein, sodass ein bequemes Aufliegen möglich wird. Die Seitenabschnitte 51.3 reduzieren den Querschnitt des Tragkörpers 50 zu den quer zur Mittellängsachse ML verlaufenden Seitenbereichen des Tragkörpers 50.

Der Rumpf des Wasserfahrzeugs 10 weist im Heckbereich 12 einen Befestigungsabschnitt 19 auf. Dieser Befestigungsabschnitt 19 weist beispielsweise eine Steckaufnahme 19.1 auf. An dem Befestigungsabschnitt 19 lässt sich ein Tragkörper 50 befestigen.

Der Tragkörper kann beispielsweise einen Anschlussbereich 52 aufweisen, in dem er an das Wasserfahrzeug 10 angekoppelt ist. Zur Anbindung des Tragkörpers 50 an das Wasserfahrzeug können beispielsweise von dem Tragkörper 50 im Anschlussbereich 52 zwei Profilabschnitte, beispielsweise zwei Rohrstücke vorstehen. Dabei verlaufen die Längsachsen dieser Profilabschnitte in Richtung der Mittellängsachse ML des Wasserfahrzeugs 10. Die Profilabschnitte können in Steckaufnahmen des Wasserfahrzeugs 10 eingeschoben werden. Dabei verlaufen die Steckaufnahmen ebenfalls in Richtung der Mittellängsachse ML des Wasserfahrzeugs 10.

Beispielsweise können die Steckaufnahmen im Bereich der seitlichen Vorsprünge 35.1 verlaufen. Hierdurch wird quer zur Mittellängsachse ML ein großer Stützabstand geschaffen.

Zur Montage des Tragkörpers 50 wird dieser mit seinen Profilabschnitten in die Steckaufnahmen eingeschoben. Mittels einer geeigneten lösbaren Verriegelung kann dann verhindert werden, dass sich der Tragkörper 50 wieder unbeabsichtigt vom Wasserfahrzeug 10 abziehen lässt.

In Figur 4 ist deutlich erkennbar, dass der Tragkörper 50 an seinen in Richtung der Mittellängsachse ML verlaufenden Seitenbereichen von Seitenkanten 53 begrenzt ist. Die Seitenkanten 53 verlaufen dabei so in Richtung der Mittellängsachse ML, dass sich die Breite des Tragkörpers 50 ausgehend vom Anschlussbereich an das Wasserfahrzeug 10 verringert. Vorzugsweise ist vorgesehen, dass sich die Breite des Tragkörpers 50 dadurch kontinuierlich verringert. Es kann auch vorgesehen sein, dass sich die Breite des Tragkörpers 50 kontinuierlich und/oder nur bereichsweise verringert.

Die Seitenkanten 53 gehen über Verrundungsabschnitt 54 in eine rückwärtige Kante 55 des Tragkörpers 50 über.

Im Anschlussbereich 52 kann beispielsweise eine Einziehung 52.1 vorgesehen sein, die die Breite des Tragkörpers 50 in Richtung zum Bugbereich 11 hin verringert.

Besonders bevorzugt ist die Anordnung des Tragkörpers 50 im Anschlussbereich an den Rumpf so getroffen, dass die seitlichen Vorsprünge 35.1 den Anschlussbereich 52 des Tragkörpers 52 quer zur Mittellängsachse ML und damit quer zur Fahrtrichtung des Wasserfahrzeugs 10 überdecken.

Die Figuren 2, 4 und 6 zeigen, dass an der Unterseite des Tragkörpers 50 eine oder mehrere Gleitflächen 56 vorgesehen sein können. Im vorliegenden Ausführungsbeispiel sind insbesondere zwei Gleitflächen 56 vorgesehen, die zueinander winkelig angestellt sind. Dies lässt insbesondere Figur 6 deutlich erkennen. Diese Darstellung zeigt die V-förmige Anstellung von Flächenbereichen 56.1 der Gleitflächen 56. Die Flächenbereiche 56.1 können als ebene Flächen oder als konkave Flächen ausgebildet sein.

Ausgehend vom Anschlussbereich 52 ist in die Unterseite des Tragkörpers 50 eine Einmuldung 57 eingetieft. Diese Einmuldung 57 erstreckt sich ausgehend vom Anschlussbereich 52 in Richtung zum freien Ende des Tragkörpers 50 hin. Die Einmuldung 57 ist im Anschluss an den Strahlaustritt 43 des Strömungskanals 40 angeordnet. Dementsprechend wird der von der Wasserschraube 41 erzeugte Wasserstrahl an der Unterseite des Tragkörpers 50 vorbeigeleitet. Wenn die in den Zeichnungen optional dargestellte Einmuldung 57 verwendet ist, so wird dieser Wasserstrahl im Bereich der Einmuldung 57 strömungsgünstig geführt.

Figur 2 lässt erkennen, dass in Strömungsrichtung nach der Wasserschraube 51 ein Strömungsstabilisator 42 im Strömungskanal 40 vorgesehen ist. Dieser Strömungsstabilisator 42 dient dazu die rotierende Strömung des von der Wasserschraube 41 (insbesondere Propeller) erzeugten Wasserstrahls zumindest größtenteils geradezurichten. Hierdurch ergibt sich eine erhebliche Leistungssteigerung.

## Patentansprüche

1. Wasserfahrzeug (10) mit einem Rumpf der im Bereich eines Oberschiffs (13) eine Auflage aufweist, auf der ein Benutzer sich mit seinem Oberkörper teilweise auflegen und sich an vorzugsweise im Bugbereich (11) angeordneten Haltegriffen (20) festhalten kann, wobei dem Rumpf ein Strömungskanal (40) zugeordnet ist oder der Rumpf einen Strömungskanal (40) aufweist. wobei im Strömungskanal (40) eine Wasserschraube (41) angeordnet ist, wobei der Strömungskanal (40) eine Ansaugöffnung (33) und in Strömungsrichtung nach der Wasserschraube (41) einen Strahlaustritt (43) im Heckbereich (12) aufweist und wobei ein Tragkörper (50) am Heckbereich (12) derart angeordnet ist, dass die Auflage mittels einer Auflagefläche (51) des Tragkörpers (50) verlängert ist,
**dadurch gekennzeichnet,**
**dass** der Tragkörper (50) an seiner Unterseite wenigstens eine Gleitfläche (56) aufweist und dass der Tragkörper (50) starr mit dem Rumpf verbunden ist.

2. Wasserfahrzeug nach Anspruch 1, **dadurch gekennzeichnet, dass** der Auflagekörper (50) auswechelbar mit dem Rumpf verbindbar oder fest mit diesem verbunden, insbesondere einteilig an den Rumpf angekoppelt ist.

3. Wasserfahrzeug nach einem der Ansprüche 1 oder 2, **dadurch gekennzeichnet, dass** zwischen dem Rumpf und dem Tragkörper (50) eine Wechselkupplung wirksam ist, mittels der der Tragkörper (50) auswechselbar mit dem Rumpf verbunden ist.

4. Wasserfahrzeug nach Anspruch 2 oder 3, **dadurch gekennzeichnet, dass** die Wechselkupplung einen oder mehrere Vorsprünge aufweist, die in eine oder mehrere Halteaufnahmen des anderen Verbindungspartners (Rumpf oder Tragkörper (50)) eingesetzt sind.

5. Wasserfahrzeug nach Anspruch 2 bis 4, **dadurch gekennzeichnet, dass** am Tragkörper (50) oder am Rumpf zwei zueinander beabstandet angeordnete Profilabschnitte vorstehen, die in Steckaufnahmen des Rumpfs oder des Tragkörpers (50) eingesetzt sind.

6. Wasserfahrzeug nach Anspruch 5, **dadurch gekennzeichnet, dass** die Profilabschnitte am Tragkörper (50) vorstehen und mit diesem fest verbunden sind.

7. Wasserfahrzeug nach einem der Ansprüche 1 bis 6, **dadurch gekennzeichnet, dass** die starre Verbindung zwischen dem Rumpf und dem Tragkörper (50) so ausgelegt ist, dass, abgesehen von fertigungsbedingten Toleranzen, keine rotatorische Bewegung und/oder keine translatorische Bewegung zwischen dem Rumpf und dem Tragkörper (50) entsteht.

8. Wasserfahrzeug nach einem der Ansprüche 1 bis 7, **dadurch gekennzeichnet, dass** der Strahlaustritt (43) des Strömungskanals (40) so angeordnet ist. dass der von der Wasserschraube (41) erzeugte Wasserstrahl an der Unterseite des Tragkörpers (50) vorbeigeleitet, insbesondere an der Unterseite des Tragkörpers (50) geführt ist.

9. Wasserfahrzeug nach einem der Ansprüche 1 bis 8, **dadurch gekennzeichnet, dass** der Tragkörper (50) an seiner Unterseite eine Einmuldung (57) aufweist, die derart ausgebildet ist, dass sie während des Fahrzeugbetriebs den Wasserstrahl teilweise aufnimmt und führt.

10. Wasserfahrzeug nach Anspruch 9, **dadurch gekennzeichnet, dass** die Einmuldung (57) sich ausgehend von dem Anschlussbereich (52) des Tragkörpers (50) an den Heckbereich des Rumpfs in Richtung des dem Bugbereich (11) abgewandten Endes erstreckt und vorzugsweise im Bereich der Unterseite des Tragkörpers (50) ausläuft.

11. Wasserfahrzeug nach einem der Ansprüche 1 bis 10, **dadurch gekennzeichnet, dass** beidseitig der Mittellängsachse (ML) des Tragkörpers (50) Gleitflächen (56) angeordnet sind, die vorzugsweise zueinander angestellt sind und die besonders bevorzugt zumindest bereichsweise als konkave Flächen oder zumindest bereichsweise als ebene Flächen ausgebildet sind.

12. Wasserfahrzeug nach einem der Ansprüche 1 bis 11, **dadurch gekennzeichnet, dass** der Rumpf im Bereich des Unterschiffs (30) Wasserführungsflächen (35) aufweist, die sich längs der Mittellängsachse (ML), welche vom Bugbereich (11) in Richtung Heckbereich (12) verläuft, erstrecken, und dass die Wasserführungsflächen (35) im Heckbereich (12) Überleitbereiche (36) aufweisen, die in die Gleitflächen des Tragkörpers (50) übergeleitet sind.

13. Wasserfahrzeug nach einem der Ansprüche 1 bis 12, **dadurch gekennzeichnet, dass** der Rumpf beidseitig Vorsprünge (35.1) aufweist, die im Heckbereich (12) angeordnet sind, dass der Tragkörper in Richtung der Mittellängsachse von Seitenkanten (53) begrenzt ist, und dass die Vorsprünge (35.1) quer zur Mittellängsachse (ML) des Rumpfs über die Seitenkanten (53) zumindest im Anschlussbereich (52) vorstehen.

14. Wasserfahrzeug nach einem der Anspruch 13, **dadurch gekennzeichnet, dass** die Vorsprünge (35.1) zumindest teilweise die Wasserführungsflächen (35) bilden.

15. Wasserfahrzeug nach einem der Ansprüche 1 bis 14, **dadurch gekennzeichnet, dass** im Rumpf zusätzlich zum Strömungskanal (40) ein Flutungsraum angeordnet ist, der während der Wasserfahrt über Wassereintrittsöffnungen (17.2, 31) mittels dem umgebenden Wasser mit Wasser gefüllt werden kann.

16. Wasserfahrzeug nach Anspruch 15, **dadurch gekennzeichnet, dass** der Flutungsraum zusätzlich zu den Wassereintrittsöffnungen (17.2, 31) auch über Wasseraustrittsöffnungen (14) mit der Umgebung derart in Verbindung steht, dass während der Wasserfahrt Wasser durch den Flutungsraum geleitet und eine darin gehaltenen elektrisch Baueinheit gekühlt wird.

17. Wasserfahrzeug nach einem der Ansprüche 1 bis 16, **dadurch gekennzeichnet, dass** beidseitig der Mittellängsachse (ML) die Haltegriffe (20 angeordnet sind und dass den Haltegriffen (ML), Bedienelemente (21) zugeordnet sind.

18. Wasserfahrzeug nach einem der Ansprüche 1 bis 17, **dadurch gekennzeichnet, dass** am Unterschiff (30) eine Ausbuchtung (32) vorgesehen ist, die den Strömungskanal (40) bildet oder diesen überdeckt, dass die Wasserführungsflächen (31) beidseitig dieser Ausbuchtung (32) angeordnet sind und/oder dass im Bereich der Ausbuchtung (32) eine oder mehrere Stabilisierungsfinnen (38) angeordnet sind.

19. Wasserfahrzeug nach einem der Ansprüche 1 bis 18, **dadurch gekennzeichnet, dass** der Tragkörper aus einem Formkörper gebildet ist, der einen Kern aus geschäumtem Kunststoffmaterial besteht, und dass dieser Kern mit einer harten Kunststoffschicht ummantelt ist.
